(19) **Europäisches Patentamt / European Patent Office / Office européen des brevets**

(11) **EP 3 266 559 A1**

(12) # EUROPEAN PATENT APPLICATION
published in accordance with Art. 153(4) EPC

(43) Date of publication:
**10.01.2018 Bulletin 2018/02**

(21) Application number: **15884026.4**

(22) Date of filing: **07.12.2015**

(51) Int Cl.:
**B23K 35/30** (2006.01)   **C22C 19/05** (2006.01)
**C22C 19/07** (2006.01)   **C22C 45/02** (2006.01)
**C22C 45/04** (2006.01)

(86) International application number:
**PCT/JP2015/084284**

(87) International publication number:
**WO 2016/139860 (09.09.2016 Gazette 2016/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.03.2015 JP 2015043337**

(71) Applicant: **Hitachi Metals, Ltd.**
**Tokyo 108-8224 (JP)**

(72) Inventors:
• **YOSHIZAWA, Yoshihito**
  **Yasugi-shi**
  **Shimane 692-8601 (JP)**
• **UEDA, Seishin**
  **Yasugi-shi**
  **Shimane 692-8601 (JP)**

(74) Representative: **Diehl & Partner GbR**
**Patentanwälte**
**Erika-Mann-Strasse 9**
**80636 München (DE)**

(54) **ALLOY BRAZING POWDER AND JOINED COMPONENT**

(57)   Provided is a brazing alloy powder with which the development of defect in a brazed portion is suppressed and which enables an increase in the joint strength of the portion to be joined. Also provided is a brazed joined component having a high joint strength of the portion to be joined. The brazing alloy powder includes particles which include 55 mass % or more of at least one element selected from Ni, Fe, and Co. The alloy powder includes not less than 10% alloy particles having an amorphous phase. In addition, $d90 \leq 60\ \mu m$, where d90 is the grain diameter indicating 90% in an integral volume distribution curve according to a laser diffraction scattering method. The joined component includes a plurality of members joined with a brazing material including the brazing alloy powder.

EP 3 266 559 A1

**Description**

TECHNICAL FIELD

The present invention relates to a brazing alloy powder and a joined component.
In the present description, a single grain will be referred to as a "particle", and an aggregation of the particles will be referred to as a "powder". An alloy particle that includes an amorphous phase will be referred to as an "amorphous alloy particle". An alloy powder that is an aggregation of alloy particles including not less than 10 vol.% of the amorphous alloy particles will be referred to as an "amorphous alloy powder". An alloy particle including a crystalline phase that substantially does not include amorphous phase will be referred to as a "crystalline alloy particle", and an alloy powder that is an aggregation of the crystalline alloy particles will be referred to as a "crystalline alloy powder".

BACKGROUND ART

Conventionally, in the field of heat exchangers (EGR coolers) for automotive exhaust gas recirculation (EGR) systems configured of various types of stainless steel, and gas turbines or steam turbines configured of various heat-resistant alloys, brazing (braze joining) is performed on members and components made of various iron-based alloys. In particular, in braze bonded components that are used in highly corrosive environments including exhaust gases, combustion gases, and steam, generally a brazing material including a Ni-base alloy powder including Cr with its corrosion resistance-increasing effect is used. In addition, for the purpose of lowering the brazing (braze joining) temperature, a brazing material including B or P with their melting point-lowering effect may be used.
Representative examples of Ni-alloy based brazing material include those according to JIS standards or AWS standards, such as BNi-2 and BNi-5 which include B, and BNi-7 which includes P. These brazing materials are so brittle as to render plastic forming, such as rolling, difficult, and are generally used in the form of alloy powder. Patent Literatures 1 and 2 disclose Ni-alloy based heat resistant brazing materials that include Cr, P, and Si (silicon), for example. The brazing materials are described as having good wettability and salt water corrosion resistance, and enabling brazing at about 1050°C (Patent Literature 1). The brazing materials are also described as having high mechanical strength and good corrosion resistance to sulfuric acid and the like, and being free from the production of slug during brazing, due to the inclusion of one or more from aluminum (Al), calcium (Ca), yttrium (Y), and a misch metal (Patent Literature 2). The brazing materials are also described as being usable in the form of a powder fabricated by a conventional water atomizing process, a foil, or a bar.

CITATION LIST

PATENT LITERATURE

Patent Literature 1: JP-A-9-225679
Patent Literature 2: JP-A-2002-144080 (JP Patent No. 3354922)

SUMMARY OF INVENTION

PROBLEMS TO BE SOLVED BY THE INVENTION

The brazing materials mentioned above have appropriate melting points. When conventional brazing material is used, brazing (soldering) is generally performed by a method as follows. A powder with a composition as described above is prepared. The powder is mixed with an appropriate amount of binder to prepare a paste. The paste (hereafter referred to as "powder brazing material") is applied to portions to be joined and heated. Conventional powder brazing material, however, tends to cause a defect in the brazed portion (braze joint portion). In addition, for some uses, the joint strength (brazing strength, soldering strength) of the portion to be joined may be lacking, and there is a need for further increase in joint strength.
An object of the present invention is to provide a brazing alloy powder with which the development of defect in the brazed portion can be suppressed and the joint strength of the portion to be joined can be increased. Another object is to provide a joined component that has been brazed using the brazing alloy powder of the present invention, and that has a high joint strength of the portion to be joined.

SOLUTIONS TO THE PROBLEMS

The present inventor has conceived of the present invention based on a discovery that the above problems can be solved by applying a powder which includes a predetermined ratio of particles having an amorphous phase, and which has a specific grain size distribution.

That is, the brazing alloy powder according to the present invention is an alloy powder that includes particles including 55 mass % or more of at least one element selected from Ni, Fe, and Co. The alloy powder includes not less than 10% of alloy particles having an amorphous phase; and d90 $\leq$ 60 $\mu$m where d90 is the grain diameter indicating 90% in an integral volume distribution curve according to a laser diffraction scattering method.

Preferably, the alloy powder includes not less than 40% of alloy particles having an amorphous phase.

Further, the alloy powder is preferably made such that (d90 - d10)/d50 $\leq$ 1.5 where d10, d50, and d90 are respectively the grain diameters indicating 10%, 50%, and 90% in an integral volume distribution curve according to a laser diffraction scattering method.

The alloy powder preferably includes components expressed by the composition formula $M_{100-x-y-z}Cr_xQ_y$-$Si_z$(mass %), where M is at least one element selected from Ni, Fe, and Co; Q is at least one element selected from B and P; x satisfies $15 \leq x \leq 30$; y satisfies $1 \leq y \leq 12$; and z satisfies $0 \leq z \leq 8$ and $7 \leq y + z \leq 15$.

M may be partly substituted by not more than 5 mass % of Mo.

Further, M may be partly substituted by not more than 2 mass % of Cu.

There is also obtained a joined component including a plurality of members joined using the brazing material including the brazing alloy powder of the present invention.

EFFECTS OF THE INVENTION

The brazing alloy powder of the present invention makes it difficult for defect to be caused in the brazed portion (braze joint portion), and can therefore contribute to an increase in the joint strength of the portion to be joined.

In addition, by applying the brazing material including the brazing alloy powder of the present invention to the brazing (soldering) of a plurality of members, a joined component having a high joint strength of the portion to be joined can be obtained.

BRIEF DESCRIPTION OF THE DRAWINGS

Fig. 1 is a diagram (photograph) illustrating an example of SEM observation of an alloy powder according to an embodiment of a brazing alloy powder of the present invention.
Fig. 2 is a diagram illustrating an example of an integral volume distribution curve (cumulative distribution) of the alloy powder illustrated in Fig. 1 according to laser diffraction scattering method.
Fig. 3 is a diagram of an example of a frequency distribution of the alloy powder illustrated in Fig. 1 according to laser diffraction scattering method (with reference to volume).
Fig. 4 is a diagram (photograph) illustrating an example of a sectional structure obtained by dispersing in a resin the alloy powder illustrated in Fig. 1 that has been randomly selected, solidifying, and performing surface polishing and etching.
Fig. 5 is a diagram (photograph) illustrating, as enlarged, a part of the sectional structure illustrated in Fig. 4.
Fig. 6 is a diagram illustrating an example of an X-ray diffraction pattern of the brazing alloy powder according to the present invention.

DESCRIPTION OF EMBODIMENTS

A brazing alloy powder according to the present invention is an alloy powder configured of particles (alloy particles) that include 55 mass % or more of at least one element selected from Ni, Fe, and Co. The elements constituting the alloy particles will be described later.

In the brazing alloy powder according to the present invention, it is important that, in terms of the ratio of the number of particles, amorphous alloy particles be included by not less than 10%, and that d90 in an integral volume distribution curve (hereafter "cumulative distribution") according to laser diffraction scattering method be not more than 60 $\mu$m. The configuration of the alloy powder with the predetermined ratio of the amorphous alloy particles having amorphous phase, and the specific grain size distribution makes it possible to suppress the development of defect in a brazed portion in which the alloy powder is used, and to increase the joint strength of the portion to be joined.

Amorphous alloy particles, compared with crystalline alloy particles, have more smoothly formed particle surfaces. Accordingly, amorphous alloy particles have a smaller surface area (entire surface area) than crystalline alloy particles of the same grain diameter, and therefore a smaller amount (volume value) of oxide layer formed on the particle surface. Thus, the oxygen content of the amorphous alloy particles becomes smaller than that of the crystalline alloy particles of the same grain diameter. In addition, amorphous alloy particles have more uniform chemical components between the particles than crystalline alloy particles, and a smaller variation. Accordingly, even when crystallized by heating, the amorphous alloy particles tend to have a more uniform structure and smaller variations than the crystalline alloy particles that have been similarly heated.

Conventionally, it has been found that brazing alloy powder tends to exhibit a decrease in wettability of the brazing material (hereafter "filler metal") melted and liquefied by heating, when the amount of oxide layer (volume value) is large or when the structural uniformity after heating is low and there are large component variations. Accordingly, when crystalline alloy powder is used as a material for brazing (brazing material), the filler metal melted and liquefied by heating tends to trap air bubbles as it wets and expands on the surface to be joined.

In contrast, the amorphous alloy powder configured to include not less than 10% of amorphous alloy particles, when melted and liquefied by heating, tends to exhibit good wettability with respect to the item to be joined (base material). Accordingly, when the amorphous alloy powder is used as the brazing material, the filler metal can smoothly wet and expand on the surface to be joined, and the trapping of air bubbles into the filler metal layer portion of the portion to be joined is suppressed. Thus, with the brazing material including amorphous alloy powder suppresses the development of defect in the filler metal layer portion of the portion to be joined due to residual air bubbles. Furthermore, a decrease in mechanical strength of the portion to be joined is prevented. Accordingly, a joined component that has a high joint strength of the portion to be joined can be obtained.

As described above, the brazing alloy powder (amorphous alloy powder) of the present invention importantly includes not less than 10% of alloy particles having amorphous phase (amorphous alloy particles). When the rate of content of the amorphous alloy particles is less than 10%, the wettability increasing effect can be hardly expected. As a result, hardly any improvement in the joint strength of the portion to be joined after brazing can be obtained. From the viewpoint of achieving the above-described wettability increasing effect, the rate of content of the alloy particles having amorphous phase is preferably 40% or more. In this way, the joint strength is further increased. More preferably, the rate of content of the alloy particles having amorphous phase is 80% or more. In this way, the joint strength is increased even further.

The brazing alloy powder of the present invention is an aggregation of alloy particles including amorphous alloy particles. According to the present invention, the rate of content of the amorphous alloy particles (the number of particles ratio) in the brazing alloy powder is determined by structural observation. Specifically, first, a plurality of particles (hereafter "powder") randomly selected from the brazing alloy powder is embedded in a resin, and polishing is performed so that a polished flat surface is formed. Then, etching is performed using a marble liquid to prepare an observation surface including a cross section of the powder. Thereafter, in the observation surface being observed with an optical microscope at an appropriate magnification ratio, the number of amorphous alloy particles (number of particles NA) and the total number of alloy particles (total number of particles N) present in a 0.5 mm square area are counted.

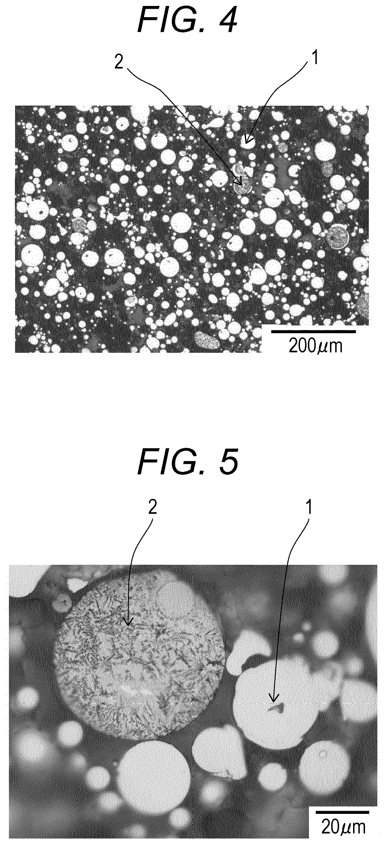

During the count, as illustrated in Fig. 4, in a cross section of the particles that includes portions in focus (with clear outline of the perimeter), those particles in which no crystal structures such as dendrites are observed (the particles in white cross sections in Fig. 4 and Fig. 5) are determined to be amorphous alloy particles, and the powder particles with observable crystal structures are determined to be crystalline alloy particles.

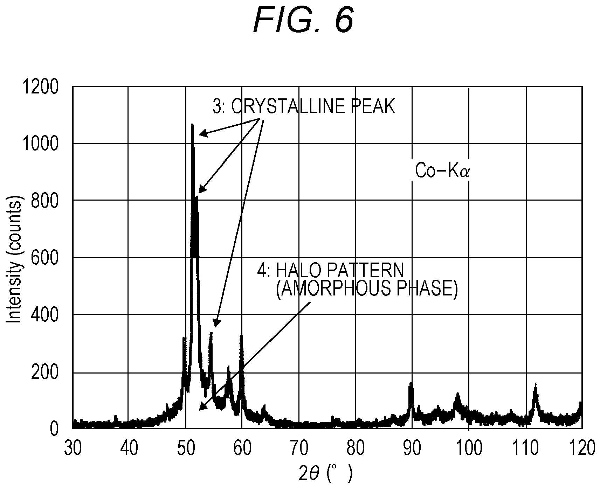

The alloy particles with no observable crystal structures were confirmed to be in amorphous state through a surface structure examination by electron beam diffraction using a scanning electronic microscope (SEM). An X-ray diffraction pattern examination of the powder composed of a mixture of the alloy particles with no observable crystal structures and the particles with observable crystal structure confirmed, as illustrated in Fig. 6, the presence of a halo pattern 4 indicating an amorphous phase corresponding to an amorphous alloy particle 1, and crystal peaks 3 corresponding to a crystalline alloy particle 2.

In the brazing alloy powder of the present invention, when the grain diameter indicating 90% in an integral volume distribution curve (cumulative distribution) according to a laser diffraction scattering method is denoted d90, d90 $\leq 60$ $\mu$m. The alloy powder having a smaller value of d90 tends to have a smaller gap volume between particles due to a smaller rate of content of coarse grains in the powder layer. Even when such alloy powder is used as brazing material in paste form for braze joining, moisture and the like that easily evaporates by heating is present in the gap between particles in the brazing material layer disposed on the surface to be joined. However, when the alloy powder with a smaller value of d90 is used, the gap volume between particles becomes smaller, and the amount of air bubbles produced by the moisture and the like can be decreased that much. Accordingly, the total amount of air bubbles in the filler metal melted and liquefied by heating is decreased. This makes it difficult for a defect due to the air bubbles in the brazing joined portion to be caused. From this viewpoint, in the brazing alloy powder of the present invention, d90 $\leq 60$ $\mu$m. In order to further decrease the total amount of air bubbles in the filler metal, it is preferable that d90 $\leq 45$ $\mu$m. In this case, an increase in brazing joint strength can be expected, although there is the influence of the component composition of the alloy powder. From the practical viewpoint of manufacturing cost and the like of the alloy powder, it is considered that d90 may be less than or equal to about 20 μm, depending on the object to be brazed.

Preferably, in the brazing alloy powder of the present invention, when the grain diameters indicating 10%, 50%, and 90% in an integral volume distribution curve according to a laser diffraction scattering method are denoted d10, d50, and d90, respectively, (d90 - d10)/d50 ≤ 1.5 is satisfied. The value of (d90 - d10)/d50 may be considered an index (sharpness) indicating the degree of sharpness of the grain size distribution of the powder including particles with various grain diameters. A smaller value indicates a sharper grain size distribution of the powder. A powder with a sharp grain size distribution may be desirable as it does not require additional operations such as sieving and is generally easy to handle. Accordingly, a smaller value of (d90-d10)/d50 of the brazing alloy powder is preferable from a practical standpoint. Preferably, the value is not more than 1.35, for example.

When the brazing alloy powder having a target d90 value in the range of d90 ≤ 60 μm is compounded using the amorphous alloy powder, the grain size distribution becomes sharp by satisfying (d90 - d10)/d50 ≤ 1.5. In this way, the rate of content of particles (frequency %) within a predetermined grain diameter range is increased, and an alloy powder that is generally considered sharp and uniformly grained can be obtained. With the amorphous alloy powder, by performing an appropriate brazing operation corresponding to the value of d90 and a median size d50, even more preferable wettability of filler metal can be obtained. In addition, the air bubbles in the filler metal tend to be suppressed even more. Accordingly, a brazing component (joined component) that has an appropriate joint strength can be easily fabricated.

The constituent elements of the amorphous alloy particles constituting the brazing alloy powder of the present invention will be described, along with preferable component compositions.

As described above, the brazing alloy powder of the present invention includes particles (alloy particles) including 55 mass % or more of at least one element selected from Ni, Fe, and Co. In this case, Ni, Fe, or Co may be independently included by 55 mass % or more. There may be a case where 55 mass % or more of Ni includes Fe or Co, a case where 55 mass % or more of Fe includes Ni or Co, or a case where 55 mass % or more of Co includes Ni or Fe.

The brazing material including 55 mass % or more of Ni is preferable for brazing a member including stainless steel, carbon steel, pure Ni, Ni-base alloy, pure Co, or Co base alloy, for example. The brazing material may be used, e.g., for brazing metal catalysts, food handling components, medical devices, and ship and automobile applications, in addition to EGR coolers and general heat exchangers.

The brazing material including 55 mass % or more of Fe also basically has usability similar to that of the brazing material composed mainly of Ni. The brazing material including the Fe base alloy powder is used for brazing automobile EGR coolers, industrial or household heat exchangers, and metal honeycomb catalysts, for example. The inclusion of Fe tends to result in higher brazing temperature as it increases the liquidus-line temperature of the brazing material. Meanwhile, Fe is inexpensive compared with Ni and Co, and therefore provides the advantage of lower brazing material manufacturing cost (material cost).

The brazing material including 55 mass % or more of Co also basically has usability generally similar to that of the brazing material mainly composed of Ni. The brazing material including the Co base alloy powder is used for brazing heat-resistant alloys of turbines, for example. The inclusion of Co can be expected to lead to a further increase in heat resistance of the brazing joined component.

With regard to the constituent elements of the brazing alloy powder of the present invention, in accordance with the purposes and uses, such as corrosion resistance, oxidation resistance, heat resistance, and a decrease in melting point, Ni (nickel), Fe (iron), or Co (cobalt) may be combined with a plurality of elements. The elements may include, for example, Cr (chromium), Mo (molybdenum), Cu (copper), V (vanadium), Nb (niobium), Ta (tantalum), C (carbon), and N (nitrogen) which are related to, e.g., corrosion resistance increases, and B (boron), P (phosphor), and Si (silicon) which are related to, e.g., promotion of amorphization.

The brazing alloy powder of the present invention is preferably expressed by a composition formula: $M_{100-x-y-z}Cr_xQ_ySi_z$(mass %), where M is at least one element selected from Ni, Fe, and Co; Q is at least one element selected from B and P; x satisfies $15 \leq x \leq 30$; y satisfies $1 \leq y \leq 12$; and z satisfies $0 \leq z \leq 8$ and $7 \leq y + z \leq 15$. In particular, when M is Ni ≥ 55 mass % or Ni ≥ (Fe + Co) where (Ni + Fe + Co) ≥ 55 mass %, corrosion resistance and heat resistance can be further improved. The brazing alloy powder expressed by the composition formula is preferable for brazing various components for automobile EGR coolers and turbines and the like from which particularly heat resistance is required.

$$Cr_x : 15 \leq x \leq 30$$

Cr has a corrosion resistance increasing effect. Accordingly, the brazing material preferably contains Cr in a range such that $15 \leq x \leq 30$ (not less than 15 mass % and not more than 30 mass %). When such brazing material is used, a pronounced effect of increasing the corrosion resistance of the brazing joined portion is obtained. If Cr is less than 15 mass %, a pronounced corrosion resistance increasing effect cannot be expected. If Cr is 30 mass % or more, embrittlement tendency increases. As a result, the mechanical strength of the portion to be joined after brazing may be decreased.

$$Q_y: 1 \leq y \leq 12$$

Q is at least one element selected from B or P. B and P have an amorphous forming ability. Accordingly, when an amorphous phase is formed, it is preferable that B or P be contained. P can be expected to provide the effect of decreasing the melting point of the alloy powder. When at least one selected from B or P is included in the brazing material, a range is preferable such that $1 \leq y \leq 12$ (not less than 1 mass % and not more than 12 mass %) is satisfied. When such brazing material is used, the filler metal tends to wet and expand better. Accordingly, the effect of increasing the mechanical strength of the portion to be joined can be expected. If Q is less than 1 mass %, formation of amorphous phase becomes unstable. If Q exceeds 12 mass %, the corrosion resistance of the portion to be joined and the vicinity thereof after brazing may be decreased.

$$Si_z: 0 \leq z \leq 8 \text{ (0 inclusive)}$$

Si has the effect of assisting amorphization by B and P. Accordingly, when an amorphous phase is formed, addition of Si is preferable. However, Si is not an essential element contained. When Si is included in the brazing material, a range such that $0 \leq z \leq 8$ (not more than 8 mass % and 0 inclusive), and such that the total (y + z) of Q and Si satisfies $7 \leq y + z \leq 15$ (not less than 7 mass % and not more than 15 mass %) is preferable. When such brazing material is used, the filler metal tends to wet and expand better, whereby the effect of increasing the mechanical strength of the portion to be joined can be expected. If Si exceeds 8 mass %, embrittlement tendency is increased. If (y + z) exceeds 15 mass %, embrittlement tendency and a corrosion resistance decreasing tendency are increased. As a result, the mechanical strength of the portion to be joined after brazing may be decreased.

In the brazing alloy powder of the present invention, part of M may be substituted by not more than 5 mass % of Mo. Mo, in addition to the effect of increasing corrosion resistance and heat resistance, has the effect of increasing amorphous forming ability. When such brazing material is used, the effect of increasing the corrosion resistance of the portion to be joined after brazing, particularly the corrosion resistance against chlorine ion, can be expected.

In the brazing alloy powder of the present invention, part of M may be substituted by not more than 2 mass % of Cu. Cu has a corrosion resistance increasing effect. When such brazing material is used, the effect of increasing the corrosion resistance of the portion to be joined after brazing, particularly the corrosion resistance against sulfuric acid, can be expected.

The brazing alloy powder of the present invention may be fabricated by a quenching powder production process, such as a water atomizing process, a gas atomizing process , and a spinning water atomization process. These quenching powder production methods are also referred to as a melting process method. The method includes causing molten metal (melt) including a required amount of an element having amorphous forming ability to continuously drip into grains; rapidly cooling and coagulating the molten metal grains (melt particles); and amorphizing the coagulate structure.

In this method, by varying the manufacturing conditions such as the dripping nozzle diameter, and the pressure, temperature, or atmosphere between dripping and coagulation, the shape, grain diameter, and the like of the fabricated amorphous alloy particles can be changed. Accordingly, by properly controlling the manufacturing conditions in accordance with the purpose or use, an amorphous alloy powder with a cumulative distribution satisfying $d90 \leq 60 \mu m$, and an amorphous alloy powder with a grain size distribution satisfying $(d90 - d10)/d50 \leq 1.5$ can be fabricated. It is also possible to obtain the amorphous alloy powder with a desired cumulative distribution and grain size distribution by performing a classification process such as sieving.

When the amorphous alloy powder in which the rate of content of the amorphous alloy particles is not less than 10% is to be fabricated, the cooling rates for the melt particles and the alloy particles obtained by coagulation of the melt particles are set correspondingly higher than the cooling rates that are generally used in crystalline alloy powder manufacturing methods. When the amorphous alloy powder including not less than 50 vol.% of amorphous alloy particles is to be fabricated, the large influence of the component composition of the melt particles is considered.

A joined component according to the present invention will be described, which is formed by joining a plurality of members using the brazing material configured of the brazing alloy powder of the present invention.

The joined component according to the present invention is brazed using the brazing alloy powder of the present invention. Accordingly, the joined component according to the present invention has a higher joint strength than a joined component joined using conventional crystalline alloy powder. The joined component according to the present invention has a configuration in which a plurality of base materials has corresponding portions to be joined and are joined to each other. The joined component according to the present invention includes a configuration in which there is a single portion to be joined and two members to be joined (hereafter "base materials") are joined, and a configuration in which two base materials having respective portions to be joined are joined to a single base material.

The joined component with the brazing material layer (portion to be joined) may be fabricated by the following method. The brazing alloy powder of the present invention is disposed on a surface to be joined, and molten filler metal is obtained by heating. The molten filler metal, after having wet and expanded on the surface to be joined, is cooled to coagulate. In this process, the alloy powder may be disposed on the surface to be joined by a method whereby a binder and the alloy powder are sprinkled, or by a method whereby a brazing material obtained by mixing a binder and the alloy powder into a paste is applied. The process from heating to coagulation may be preferably implemented in a vacuum atmosphere, a depressurized inert gas atmosphere of argon or nitrogen, or a high-purity dry hydrogen gas atmosphere. Particularly, a strongly reducing hydrogen gas atmosphere or a vacuum atmosphere is preferable as they can be expected to be highly effective in preventing oxidation of the portion to be joined and for preventing air bubble residues. In the process of cooling and coagulating the molten filler metal, it is preferable to apply pressure to the base materials so as to pressurize the portion to be joined, whereby the effect of increasing the joint strength of the portion to be joined can be expected.

Examples

The present invention will be described with reference to specific examples. The scope of the present invention, however, is not limited to the Examples disclosed herein. Elements of which inclusion is not intended, elements which derive from the raw materials, manufacturing devices and the like and of which inclusion is inevitable, and elements that remain after being used for removing slug and the like will be referred to as "trace elements".

(Example 1)

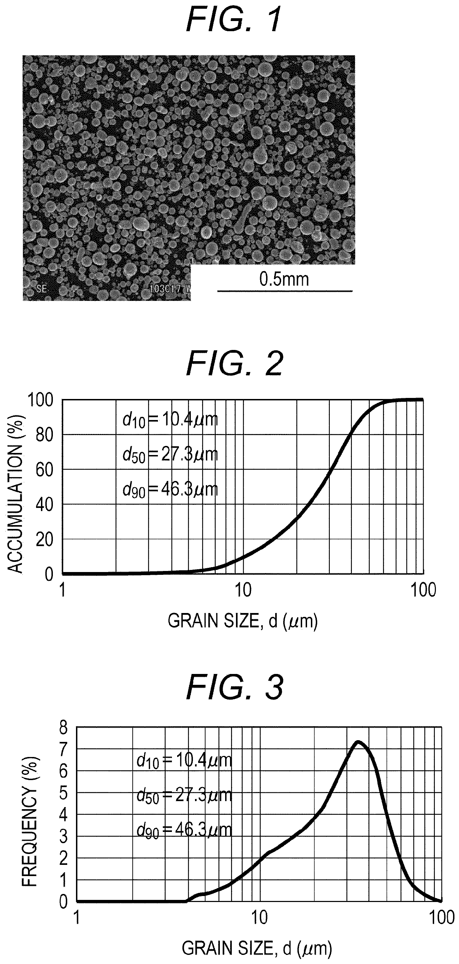

An amorphous alloy powder (present invention example A) includes, in terms of percent by mass, 29.4% of Cr, 6.3% of P, and 4.1 % of Si, the balance being Ni and trace elements. The amorphous alloy powder (present invention example A) was fabricated by a gas atomizing process. In this case, a total of Ni and trace elements is 60.2 mass %, including 55 mass % or more Ni. An amorphous alloy powder arbitrarily selected from the fabricated result was examined as an object. Fig. 1 illustrates an example of an image observed using a SEM. Fig. 2 illustrates an example of a cumulative distribution according to a reference volume, using a laser diffraction/scattering type grain diameter distribution measurement device (Microtrac (registered trademark) ASVR) from Nikkiso Co., Ltd.. Fig. 3 illustrates an example of a frequency distribution. From Fig. 2, it was confirmed that the value of d90 of the amorphous alloy powder was 46.3 $\mu$m and in a range of not more than 60 $\mu$m. It has also been confirmed from Fig. 3 that the d50 value of the amorphous alloy powder was 27.3 $\mu$m, and that the grain size distribution was sharp. In the case of the amorphous alloy powder, the value of (d90 - d10)/d50 was confirmed to be 1.3 (rounded off to one decimal place).

An appropriate amount of the amorphous alloy powder (present invention example A) was arbitrarily selected and embedded in a resin. Polishing was performed to form a flat surface. Further, etching was performed using a marble liquid. In this way, an observation surface having a cross section of the powder was fabricated. Fig. 4 illustrates an example of an image of the observation surface observed with an optical microscope. Fig. 5 illustrates an example of an observed image in which a part of the observed image of Fig. 4 is enlarged. The surface structure was examined by electron beam diffraction using a SEM. As a result, it was confirmed that the particles with white cross sections observed were in amorphous phase, and that the particles with cross sections having dendritic structures observed were crystal structures. In addition, an appropriate amount of the amorphous alloy powder (present invention example A) was arbitrarily selected, and X-ray diffraction (radiation source: Co-K$\alpha$, range: 0.5 mm square) was performed. As a result, an X-ray diffraction pattern illustrated in Fig. 6 was confirmed. In Fig. 6, a halo pattern 4 corresponding to the amorphous phase, and crystal peaks 3 corresponding to the crystal structure were recognized. Also by X-ray diffraction, the amorphous alloy powder (present invention example A) was confirmed to be an alloy powder in which the alloy powder having amorphous phase and the alloy powder having crystal structure were mixed.

In the observation surface observed with an optical microscope at an appropriate magnification ratio, the number of the amorphous alloy particles present in a 0.5 mm square area (the number of particles NA) and the total number of the alloy particles (total number of particles N) were counted. In this case, as illustrated in Fig. 4, in the cross sections of the particles having portions that are in focus (clear outline of the perimeter), the number of the particles with white cross sections observed (the number of particles NA), and the total number of alloy particles including the particles without the white cross sections (total number of particles N) were determined. From the number of particles NA and the total number of particles N, the value of NA/N $\times$ 100, which indicates the rate of content of the amorphous alloy particles, was determined and confirmed to be 83.3%.

Then, two block-shaped base materials (members to be joined) of austenite-based stainless steel (SUS304) were prepared. An appropriate amount of an arbitrarily selected amorphous alloy powder (present invention example A) was mixed with an appropriate amount of binder to prepare a paste of brazing material. The brazing material was applied onto the surface to be joined of one of the base materials, and the other base material was placed thereon. The base materials were heated to 1080°C in a vacuum heat-treating furnace, held for three hours, and then cooled. In this way, the two base materials were brazed (braze joined), and a plurality of joined components (brazed couplings) were fabricated. For comparison with Example A, a crystalline alloy powder (comparative example A) having substantially the same component composition as in Example A was prepared. By performing brazing (braze joining) on base materials with the same material and shape as those of Example A, a plurality of joined components (brazed couplings) were fabricated.

Then, in order to evaluate the joint strength after brazing, test pieces were cut off from the plurality of joined components corresponding to present invention example A, including the portions to be joined, and a tensile test was performed to measure tensile strength. As a result, it was confirmed that five test pieces had an average tensile strength value of 282 MPa. Similarly, using a plurality of joined components corresponding to comparative example A, a similar measurement to that of Example A was performed, and the five test pieces have an average tensile strength value of 231 MPa. Accordingly, it was confirmed that the joined components including the brazing alloy powder of the present invention (present invention example A) as brazing material had higher brazing (braze joining) joint strengths than the joined components including the crystalline alloy powder (comparative example A) including substantially no amorphous alloy particles as brazing material.

(Example 2)

Amorphous alloy powders (present invention examples Nos. 1 to 15) having the component compositions shown in Table 1, and crystalline alloy powders (comparative examples Nos. 16 to 20) were prepared using a gas atomizing process. Table 1 shows, as the result of examination of the respective alloy powders arbitrarily selected from those prepared, d90 determined from cumulative distributions according to laser diffraction scattering method (with reference to volume), and the rate of content of the amorphous alloy particles determined by structural observation (the value of $NA/N \times 100$).

Table 1

| Division | No | Component composition (mass %) | d90 ($\mu$m) | Rate of content of amorphous alloy powder (%) | Tensile strength (MPa) |
|---|---|---|---|---|---|
| Present Invention | 1 | $Ni_{bal.}Cr_{28.3}P_{6.2}Si_{3.5}$ | 44.5 | 83.3 | 293 |
| | 2 | $Ni_{bal.}Fe_{2.8}Cr_{27.1}B_{0.7}P_{6.0}Si_{6.5}$ | 48.2 | 80.4 | 285 |
| | 3 | $Ni_{bal.}Fe_{1.3}Cr_{28.0}P_{6.2}Si_{3.5}$ | 43.1 | 87.8 | 301 |
| | 4 | $Ni_{bal.}Fe_{15.6}Cr_{26.3}P_{8.0}Si_{1.5}$ | 40.0 | 92.5 | 306 |
| | 5 | $Ni_{bal.}Fe_{10.8}Cr_{5.6}B_{0.5}P_{6.2}Si_{3.5}Mo_{1.5}$ | 38.3 | 94.3 | 312 |
| | 6 | $Ni_{bal.}Fe_{0.4}Co_{0.2}Cr_{24.3}B_{1.0}P_{6.5}Si_{1.8}$ | 45.2 | 85.2 | 271 |
| | 7 | $Ni_{bal.}Fe_{0.5}Cr2_{8.4}P_{6.2}Si_{8.0}Mo_{0.5}$ | 44.0 | 84.7 | 295 |
| | 8 | $Ni_{bal.}Fe_{0.5}Cr2_{8.2}P_{6.2}Si_{3.5}Mo_{1.5}Cu_{0.5}$ | 43.8 | 83.1 | 291 |
| | 9 | $Ni_{bal.}Cr_{2.0}B_{3.1}Si_{4.8}$ | 51.4 | 77.5 | 277 |
| | 10 | $Ni_{bal.}Cri_{5.3}B_{1.5}P_{2.3}Si_{3.5}$ | 53.5 | 72.8 | 281 |
| | 11 | $Ni_{bal.}Fe_{0.3}Cr_{29.1}P_{6.2}Si_{4.2}Mo_{5.0}$ | 54.2 | 69.8 | 282 |
| | 12 | $Ni_{bal.}Co_{0.8}Cr_{2.8}P_{10.1}Si_{0.9}$ | 57.2 | 81.1 | 280 |
| | 13 | $Ni_{bal.}Cr_{27.2}B_{0.8}P_{6.9}Si_{1.0}$ | 58.6 | 48.2 | 271 |
| | 14 | $Ni_{bal.}Cr_{15.0}P_{6.8}Si_{4.9}Mo_{1.3}Cu_{1.0}$ | 59.7 | 28.8 | 263 |
| | 15 | $Ni_{bal.}Fe_{0.8}Cr_{28.3}P_{6.2}Si_{0.8}Cu_{2.0}$ | 60.0 | 10.5 | 260 |

(continued)

| Division | No | Component composition (mass %) | d90 (μm) | Rate of content of amorphous alloy powder (%) | Tensile strength (MPa) |
|---|---|---|---|---|---|
| Comparative Example | 16 | $Ni_{bal.}Fe_{0.5}Cr_{22.3}P_{5.7}Si_{2.3}$ | 69.2 | 6.8 | 245 |
| | 17 | $Ni_{bal.}Fe_{5.8}Cr_{28.3}P_{6.2}Si_{3.5}$ | 72.9 | 4.5 | 235 |
| | 18 | $Ni_{bal.}Fe_{5.1}Cr_{15.8}B_{0.3}P_{6.2}Si_{0.6}$ | 77.6 | 1.8 | 228 |
| | 19 | $Ni_{bal.}Fe_{5.8}Cr_{28.1}B_{0.6}P_{6.2}Si_{0.5}$ | 66.9 | 8.1 | 251 |
| | 20 | $Ni_{bal.}Co_{1.1}Cr_{15.1}P_{7.3}Si_{1.2}$ | 88.8 | 0 | 225 |

Then, two block-shaped base materials (members to be joined) of ferrite-based stainless steel (SUS430) were prepared. An appropriate amount of arbitrarily selected alloy powder was mixed with an appropriate amount of binder to prepare a paste of brazing material. The brazing material was applied to the surface to be joined of one of the base materials, and the other base material was placed thereon. The base materials were heated to 1100°C in a vacuum heat-treating furnace, held for 30 minutes, and then cooled. In this way, the two base materials were brazed (braze joined), and a plurality of joined components (brazed couplings) were fabricated. The joined components were fabricated using the brazing materials prepared using the respective alloy powders.

The joint strength of the joined components including the respective alloy powders fabricated using brazing material was examined by fabricating test pieces as in Example 1. The respective average tensile strength values are also shown in Table 1. As a result, it was confirmed that all of the joined components including the brazing alloy powders of the present invention (present invention examples Nos. 1 to 15) as brazing material had higher brazing (braze joining) joint strengths than any of the joined components including the brazing alloy powders (comparative examples Nos. 16 to 20) outside the range of the present invention as brazing material. It was also confirmed that, among present invention examples Nos. 1 to 15, present invention examples Nos. 1 to 13, in which the rate of content of the amorphous alloy particles was not less than 40 vol.%, had greater joint strengths than present invention examples Nos. 14 and 15, in which the ratio was less than 40 vol.%.

(Example 3)

As in Example 1, the brazing alloy powder of the present invention and an alloy powder outside the range of the present invention were prepared by a gas atomizing process. The brazing alloy powder of the present invention included, in terms of percent by mass, 28.9% of Cr, 6.2% of P, 3.2% of Si, and 0.1% of Fe, the balance being Ni and trace elements. Further, by the same method as in Example 1, the ratio of particles in amorphous phase included in the respective alloy powders, and the grain size distributions of the alloy powders were determined. As a result, in the brazing alloy powder of the present invention, 92.5% was the particles in amorphous phase, and d90 was 43.2 μm. In the case of the alloy powder outside the range of the present invention, 6.5% was the particles in amorphous phase, and d90 was 69.5 μm. In addition, with respect to the alloy particles of both, the melting point was measured from the respective endothermic peaks by varying the temperature-increase rate from 5°C/min to 10°C/min to 20°C/min according to differential thermal analysis (DTA). The liquidus-line temperature TL was determined by extrapolating the temperature-increase rate to 0°C/min. The liquidus-line temperature TL of the alloy powder outside the range of the present invention was 1006°C. The liquidus-line temperature TL of the brazing alloy powder of the present invention was 996°C, which was 10°C lower. In this respect, it is inferred that the temperature for complete melting was increased by the presence of phases with high melting points due to the non-amorphous phase, crystalline particles being relatively large and coarse. In contrast, it is inferred that, in the amorphous phase particles, the temperature for complete melting was decreased by the absence of substantial segregation, resulting in fine and uniform structures after being crystallized by heating.

DESCRIPTION OF REFERENCE SIGNS

1. Amorphous alloy particle
2. Crystalline alloy particle
3. Crystal peak

4. Halo pattern (amorphous phase)

**Claims**

1.  A brazing alloy powder comprising particles including 55 mass % or more of at least one element selected from Ni, Fe, and Co,
    wherein:

    the alloy powder includes not less than 10% of alloy particles having an amorphous phase; and
    $d90 \leq 60\ \mu m$ where d90 is the grain diameter indicating 90% in an integral volume distribution curve according to a laser diffraction scattering method.

2.  The brazing alloy powder according to claim 1, wherein the alloy powder includes not less than 40% of alloy particles having an amorphous phase.

3.  The brazing alloy powder according to claim 1 or 2, wherein the alloy powder is such that $(d90 - d10)/d50 \leq 1.5$ where d10, d50, and d90 are respectively the grain diameters indicating 10%, 50%, and 90% in an integral volume distribution curve according to a laser diffraction scattering method.

4.  The brazing alloy powder according to any one of claims 1 to 3, wherein the alloy powder includes components expressed by the composition formula

    $$M_{100-x-y-z}Cr_xQ_ySi_z(mass\ \%),$$

    wherein:

    M is at least one element selected from Ni, Fe, and Co;
    Q is at least one element selected from B and P;
    x satisfies $15 \leq x \leq 30$;
    y satisfies $1 \leq y \leq 12$; and
    z satisfies $0 \leq z \leq 8$ and $7 \leq y + z \leq 15$.

5.  The brazing alloy powder according to claim 4, wherein M is partly substituted by not more than 5 mass % of Mo.

6.  The brazing alloy powder according to claim 4, wherein M is partly substituted by not more than 2 mass % of Cu.

7.  A joined component comprising a plurality of members joined with a brazing material comprising the brazing alloy powder according to any one of claims 1 to 6.

## FIG. 1

0.5mm

## FIG. 2

$d_{10} = 10.4 \mu m$

$d_{50} = 27.3 \mu m$

$d_{90} = 46.3 \mu m$

ACCUMULATION (%)

GRAIN SIZE, d ($\mu$m)

## FIG. 3

$d_{10} = 10.4 \mu m$

$d_{50} = 27.3 \mu m$

$d_{90} = 46.3 \mu m$

FREQUENCY (%)

GRAIN SIZE, d ($\mu$m)

# FIG. 4

# FIG. 5

## FIG. 6

## INTERNATIONAL SEARCH REPORT

| International application No. |
|---|
| PCT/JP2015/084284 |

**A. CLASSIFICATION OF SUBJECT MATTER**

*B23K35/30*(2006.01)i, *C22C19/05*(2006.01)i, *C22C19/07*(2006.01)i, *C22C45/02* (2006.01)i, *C22C45/04*(2006.01)i

According to International Patent Classification (IPC) or to both national classification and IPC

**B. FIELDS SEARCHED**

Minimum documentation searched (classification system followed by classification symbols)
B23K35/00-35/40, C22C19/00-19/07, C22C38/00-38/60, C22C45/00-45/10

Documentation searched other than minimum documentation to the extent that such documents are included in the fields searched
Jitsuyo Shinan Koho          1922–1996    Jitsuyo Shinan Toroku Koho   1996–2016
Kokai Jitsuyo Shinan Koho    1971–2016    Toroku Jitsuyo Shinan Koho   1994–2016

Electronic data base consulted during the international search (name of data base and, where practicable, search terms used)
DWPI(Thomson Innovation)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2009-148769 A  (Tokyo Braze Co., Ltd.),<br>09 July 2009 (09.07.2009),<br>claims 1, 2; paragraphs [0014] to [0033]<br>(Family: none) | 1-3,5,7<br>4,6 |
| Y<br>A | WO 2007/114040 A1  (Toyo Aluminium Kabushiki<br>Kaisha),<br>11 October 2007 (11.10.2007),<br>paragraphs [0024] to [0026]<br>& US 2009/0233118 A1<br>paragraphs [0028] to [0030]<br>& EP 2002923 A2          & CN 101365558 A<br>& KR 10-2008-0106888 A | 1-3,5,7<br>4,6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 February 2016 (03.02.16) | 16 February 2016 (16.02.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2015/084284

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2007-501127 A  (Vacuumschmelze GmbH & Co.<br>KG),<br>25 January 2007 (25.01.2007),<br>paragraphs [0048], [0049]<br>& US 2005/0230454 A1<br>paragraphs [0065], [0066]<br>& WO 2005/014870 A1     & EP 1651786 A1<br>& KR 10-2006-0034203 A  & CN 1701125 A<br>& AT 420216 T | 1-3,5,7<br>4,6 |
| A | JP 2013-121614 A  (Nippon Steel & Sumitomo<br>Metal Corp.),<br>20 June 2013 (20.06.2013),<br>(Family: none) | 1-7 |
| A | JP 2008-518786 A  (Metglas, Inc.),<br>05 June 2008 (05.06.2008),<br>& US 2006/0090820 A1     & WO 2006/050334 A2<br>& EP 1812615 A2          & KR 10-2007-0085596 A | 1-7 |
| A | JP 2008-119744 A  (Nippon Steel Corp.),<br>29 May 2008 (29.05.2008),<br>& US 2009/0258249 A1     & WO 2007/088951 A1<br>& EP 1979127 A1          & CN 101374631 A<br>& KR 10-2008-0093139 A | 1-7 |
| A | JP 11-505178 A  (Allied Signal Inc.),<br>18 May 1999 (18.05.1999),<br>& US 6200690 B1          & WO 1996/037335 A1<br>& EP 827437 A1           & DE 69609962 D1<br>& IL 118089 A            & RU 2167751 C2 | 1-7 |

Form PCT/ISA/210 (continuation of second sheet) (January 2015)

**EP 3 266 559 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9225679 A
- JP 2002144080 A
- JP 3354922 B